# EUROPEAN PATENT SPECIFICATION

(11) **EP 4 253 155 B1**
(45) Date of publication and mention of the grant of the patent: **24.04.2024**
(21) Application number: 23161956.0
(22) Date of filing: 15.03.2023
(51) Int. Cl.: B60R 13/01

(54) **TRUNK FLOOR MOUNTING STRUCTURE FOR VEHICLE, AND VEHICLE**
KOFFERRAUMBODENMONTAGESTRUKTUR FÜR FAHRZEUG UND FAHRZEUG
STRUCTURE DE MONTAGE DE PLANCHER DE COFFRE POUR VÉHICULE ET VÉHICULE

(30) Priority: 28.03.2022 CN 202210308908
(43) Date of publication of application: 04.10.2023
(73) Proprietor: Nio Technology (Anhui) Co., Ltd, Hefei City, Anhui 230601 (CN)
(72) Inventor: ZHOU, Dingshun, Shanghai, 201805 (CN); ZHU, Ruihu, Shanghai, 201805 (CN); WANG, Tao, Shanghai, 201805 (CN); YIN, Zhangjiu, Shanghai, 201805 (CN)
(74) Representative: Vossius & Partner Patentanwälte Rechtsanwälte mbB

(56) References cited:
- WO-A1-2019/026967
- FR-A1- 3 013 023

## Description

### Technical Field

The disclosure relates to the technical field of vehicles, and in particular to a trunk floor mounting structure for a vehicle, and a vehicle.

### Background Art

A vehicle in the prior art is typically provided with a boot (also known as a "trunk") to store various personal items, so as to meet the loading requirements of a user. Generally, emergency supplies, such as a spare tire, a fire extinguisher, a first-aid kit, a driver's tool kit, and a warning triangle, are also stored in the boot for unexpected needs. In order to store the emergency supplies neatly and stably, a trunk floor (i.e., a trunk floor) is generally used to divide the boot into a lower space for storing emergency supplies and an upper space for storing personal items.

Currently, the trunk floors are mostly of an integrated structure, resulting in the case that the entire trunk floor needs to be lifted when the items in the lower space of the boot (including but not limited to emergency supplies) are fetched, so that the trunk floor is not only inconvenient to operate, but also makes the items on the trunk floor slide into the boot, thereby increasing the difficulty of fetching the items. In order to solve the above problem, a two-segment trunk floor has been developed in the prior art. For example, Chinese utility model patent CN 212861675 U discloses a trunk floor assembly. The trunk floor assembly includes an inner floor and an outer floor connected thereto by means of a hinge. By arranging the trunk floor of the integrated structure as the inner floor and the outer floor hinged to each other, the outer floor can be flipped without affecting the placement of items on the inner floor, and items located below the outer floor can be conveniently fetched. However, during practical applications, on the one hand, it is difficult to fetch the items in the lower space while the outer floor is flipped; on the other hand, when the outer floor is completely flipped onto the inner floor toward the inside of the boot, although the items in the lower space can be easily fetched, it is extremely inconvenient to reset the outer floor because the reset requires a reverse flip of the upper floor deep into the inside of the boot.

Thus, a new technical solution is required in the art to solve the above problems.

### Summary

In order to solve the technical problem in the prior art that a trunk floor is inconvenient to operate, the disclosure provides a trunk floor mounting structure for a vehicle. The trunk floor mounting structure is configured to be arrangeable in a boot of the vehicle, and includes: a floor, the floor including a front floor and a rear floor reversibly fixed to the front floor; and a suspension mechanism including a stop member and a limiting member cooperating with each other, the stop member having a fixed end fixed to a lower surface of the rear floor and a movable end capable of extending to a lower surface of the front floor, and the limiting member being configured to be arrangeable on at least one of a left side wall and a right side wall of the boot, wherein when the rear floor is flipped by a predetermined obtuse angle relative to the front floor from an initial position, the movable end abuts against the limiting member such that the rear floor is suspended in a suspended position.

The trunk floor mounting structure for the vehicle of the disclosure is configured to be arrangeable in the boot of the vehicle. In the trunk floor mounting structure for the vehicle of the disclosure, a floor and a suspension mechanism are included. The floor includes a front floor and a rear floor reversibly fixed to the front floor. The suspension mechanism includes a stop member and a limiting member cooperating with each other. The stop member has a fixed end and a movable end opposite to each other. The fixed end is fixed to a lower surface of the rear floor, and the movable end is capable of extending to a lower surface of the front floor. Thus, when the rear floor is flipped relative to the front floor, the movable end of the stop member is also rotatable about the fixed end to cooperate with the stop member. The limiting member is arranged on at least one of the left side wall and the right side wall of the boot to enrich the types of products. When the rear floor is flipped by a predetermined obtuse angle relative to the front floor from the initial position, the movable end of the stop member abuts against the limiting member cooperating therewith such that the rear floor can be conveniently suspended in a suspended position. It should be noted that the "initial position" described herein refers to the arrangement position of the floor (including the front floor and the rear floor) inside the boot in a substantially horizontal direction. When the floor is in the initial position, the user can conveniently place items on the horizontally arranged floor to meet the loading need. When it is desired to fetch an item from the lower portion of the floor, the user can fetch the item only by flipping (defined as "forward direction") the rear floor toward a front portion of the boot, without lifting the entire floor. Due to the cooperation of the stop member and the limiting member, the rear floor can be stably suspended in the suspended position, so that the user can free his hands and conveniently fetch the items, and the difficulty in resetting (namely, reversely flipping to the initial position) due to excessive flipping of the rear floor is also avoided, thereby significantly improving the convenience of operation, and enhancing the user experience.

In the above-described preferred technical solution of the trunk floor mounting structure for the vehicle, the limiting member is a retractable elastic limiting member, and the movable end may force the elastic limiting member to retract, such that the rear floor may continue to flip toward the front floor from the suspended position and may be reset reversely. By providing the limiting member as the retractable elastic limiting member, the movable end can conveniently force the elastic limiting member to retract, allowing the rear floor to continue to flip toward the front portion of the boot according to the actual need, so that the items can be well fetched, and the problem of failing to smoothly reset due to excessive flipping can also be avoided.

In the above-described preferred technical solution of the trunk floor mounting structure for the vehicle, the elastic limiting member in an assembled state has a first inclined surface facing the front portion of the boot and a second inclined surface facing a rear portion of the boot, and a first angle of inclination formed by the first inclined surface and a plane in which the left side wall or the right side wall is located is greater than a second angle of inclination formed by the second inclined surface and the plane. With the above-described arrangement, the elastic limiting member has the first inclined surface with a larger degree of inclination and the second inclined surface with a smaller degree of inclination. When the stop member abuts against the first inclined surface facing the front portion of the boot and with the larger degree of inclination, the rear floor can be stably suspended in the suspended position. Correspondingly, when the stop member cooperates with the second inclined surface facing the rear portion of the boot and with the smaller degree of inclination, the stop member can conveniently force the elastic limiting member to retract, reducing the difficulty in resetting.

In the above-described preferred technical solution of the trunk floor mounting structure for the vehicle, there is a flexible plate covering a connection of the front floor and the rear floor, and the flexible plate has a first end fixed to an upper surface of the front floor and a second end fixed to an upper surface of the rear floor. By providing the flexible plate at the connection of the front floor and the rear floor, the pivotal connection of the two floors can be conveniently achieved. In addition, the flexible plate may also cover a joint at the connection of the front floor and the rear floor to exert an aesthetic effect on components.

In the above-described preferred technical solution of the trunk floor mounting structure for the vehicle, a plurality of hook and loop fasteners spaced apart from each other are further provided between the front floor and the rear floor, and each of the hook and loop fasteners has a third end fixed to the lower surface of the front floor and a fourth end fixed to the lower surface of the rear floor. With the above-described arrangement, it is possible to enhance the effectiveness and the firmness of the connection between the front floor and the rear floor.

In the above-described preferred technical solution of the trunk floor mounting structure for the vehicle, the predetermined obtuse angle is greater than 90° but less than or equal to 120°. With the above-described arrangement, the predetermined obtuse angle may be moderate to avoid increasing the difficulty in resetting the rear floor due to an excessively large angle.

In the above-described preferred technical solution of the trunk floor mounting structure for the vehicle, a limiting groove that extends toward the inside of the front floor and can receive the movable end is formed in the lower surface of the front floor. With the above-described arrangement, the movable end of the stop member can abut against the limiting groove in the front floor when the rear floor is in the initial position, so that the entire floor has a stable connection performance to enhance the mechanical bearing capacity of the floor.

In the above-described preferred technical solution of the trunk floor mounting structure for the vehicle, the limiting member includes a first limiting member suitable for being arranged on the left side wall, and a second limiting member suitable for being arranged on the right side wall, and the stop member includes a first stop member cooperating with the first limiting member and a second stop member cooperating with the second limiting member. With the above-described arrangement, it is possible to make a stress more uniform when the rear floor is in the suspended position.

In order to solve the technical problem in the prior art that the trunk floor is inconvenient to operate, the disclosure further provides a vehicle. The vehicle includes: a boot; and a trunk floor mounting structure for a vehicle according to any one of the technical solutions described above, the trunk floor mounting structure being arranged in the boot. By using the trunk floor mounting structure for the vehicle described in any one of the technical solutions described above, the vehicle of the disclosure allows the rear floor in the trunk floor mounting structure to be conveniently flipped from the initial position to the suspended position, so that the two hands of the user can be freed to facilitate fetching the items in the lower space of the boot, and the rear floor can also be conveniently reset, thereby improving the convenience of operation and the user experience.

In the preferred technical solutions of the vehicle described above, an accommodation cavity is formed in the boot, a side wall of the boot is formed with a through hole in communication with the accommodation cavity, the limiting member of the trunk floor mounting structure is retractably fixed in the accommodation cavity, and part of the limiting member may extend out of the through hole so as to cooperate with the stop member of the trunk floor mounting structure. With the above-described arrangement, the limiting member of the trunk floor mounting structure can be retractably fixed to the side wall of the boot so as to cooperate with the stop member of the trunk floor mounting structure.

### Brief Description of the Drawings

Preferred embodiments of the disclosure are described below with reference to the accompanying drawings, in which:
Fig. 1 is a partial schematic structural diagram of an embodiment of a vehicle according to the disclosure;
Fig. 2 is a top view of an embodiment of a trunk floor mounting structure for a vehicle according to the disclosure;
Fig. 3 is a bottom view of an embodiment of a trunk floor mounting structure for a vehicle according to the disclosure;
Fig. 4 is a schematic structural diagram of an embodiment of a floor in a suspended position in a trunk floor mounting structure for a vehicle according to the disclosure;
Fig. 5 is a partially enlarged view of part A of the embodiment of the trunk floor mounting structure for the vehicle shown in Fig. 3;
Fig. 6 is a sectional view taken along section line A-A shown in Fig. 5;
Fig. 7 is a partially enlarged view of part B of the embodiment of the trunk floor mounting structure for the vehicle shown in Fig. 4;
Fig. 8 is a sectional view taken along section line B-B shown in Fig. 7;
Fig. 9 is a schematic structural diagram of an embodiment of a floor in different positions in a trunk floor mounting structure for a vehicle according to the disclosure;
Fig. 10 is a sectional view taken along section line C-C shown in Fig. 9; and
Fig. 11 is a schematic diagram of an angle of an embodiment of a first inclined surface and a second inclined surface in a trunk floor mounting structure for a vehicle according to the disclosure.

List of reference signs:
1. Vehicle; 10. Boot; 11. Storage space; 11a. Upper space; 11b. Lower space; 12. Left side wall; 13. Mounting bracket; 131. Bracket body; 132. Through hole; 133. Accommodation cavity; 134. Bracket mounting hole; 14. Support wall; 20. Trunk floor mounting structure; 21. Floor; 211. Front floor; 211a. Front floor upper surface; 211b. Front floor lower surface; 2111. Front floor body; 2112. Snap-fitting portion; 2113. Limiting groove; 212. Rear floor; 212a. Rear floor upper surface; 212b. Rear floor lower surface; 2121. Rear floor body; 2122. Grip hole; 2123. Mounting groove; 213. Flexible plate; 22. Suspension mechanism; 221. Stop member; 2211. Stop member body; 2212. Fixed end; 22121. Mounting part; 2213. Movable end; 22131. Reinforcement protrusion; 222. Limiting member; 222a. Elastic limiting member; 2221. Telescopic rod; 2222. Limiting head; 22221. First inclined surface; 22222. Second inclined surface; 223. Reset elastic member; 224. Spring mounting bracket.

### Detailed Description of Embodiments

Preferred embodiments of the disclosure are described below with reference to the accompanying drawings. Those skilled in the art should understand that these embodiments are only used to explain the technical principles of the disclosure, and are not intended to limit the scope of protection of the disclosure.

It should be noted that, in the description of the disclosure, the terms that indicate the direction or positional relationship, such as "upper", "lower", "left", "right", "inner", and "outer", are based on the direction or positional relationship shown in the figures, which is merely for ease of description instead of indicating or implying that the apparatus or element must have a particular orientation and be constructed and operated in a particular orientation, and therefore, should not be construed as limiting the disclosure. Furthermore, the terms "first" and "second" are used for descriptive purposes only, and cannot be understood as indicating or implying relative importance.

In addition, it should also be noted that, in the description of the disclosure, the terms "dispose" and "connect" should be interpreted in a broad sense unless explicitly defined and limited otherwise. For example, a connection may be a fastened connection, a detachable connection, or an integral connection; and may be a direct connection, an indirect connection by means of an intermediary, or internal communication between two elements. For those skilled in the art, the specific meaning of the above-mentioned terms in the disclosure can be interpreted according to the specific situation.

In order to solve the technical problem in the prior art that a trunk floor is inconvenient to operate, the disclosure provides a trunk floor mounting structure 20 for a vehicle 1. The trunk floor mounting structure 20 is configured to be arrangeable in a boot 10 of the vehicle 1, and includes: a floor 21, the floor 21 including a front floor 211 and a rear floor 212 reversibly fixed to the front floor 211; and a suspension mechanism 22, the suspension mechanism 22 including a stop member 221 and a limiting member 222 cooperating with each other, the stop member 221 having a fixed end 2212 fixed to a rear floor lower surface 212b and a movable end 2213 capable of extending to a front floor lower surface 211b, and the limiting member 222 being configured to be arrangeable on at least one of a left side wall 12 and a right side wall of the boot 10, wherein when the rear floor 212 is flipped by a predetermined obtuse angle α relative to the front floor 211 from an initial position I, the movable end 2213 abuts against the limiting member 222 such that the rear floor 212 is suspended in a suspended position II.

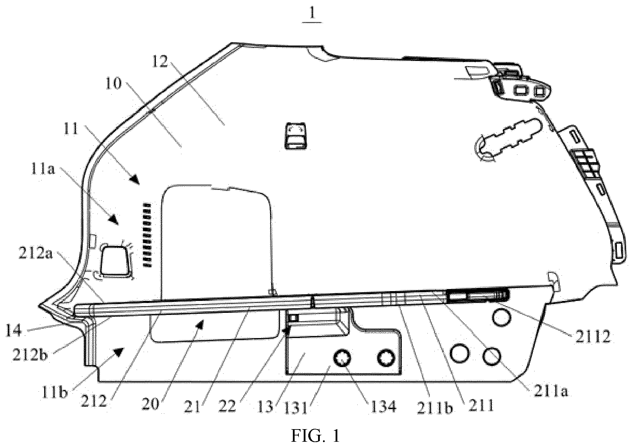

Fig. 1 is a partial schematic structural diagram of an embodiment of the vehicle according to the disclosure. As shown in Fig. 1, in one or more embodiments, the vehicle 1 of the disclosure includes the boot 10 and the trunk floor mounting structure 20 arranged in the boot 10. The boot 10 is located at a rear portion of the vehicle 1 and defines a storage space 11 for storing items. The storage space 11 is divided into an upper space 11a and a lower space 11b by the floor 21 in the trunk floor mounting structure 20. The upper space 11a can be used for placing personal items of a user, such as a storage box, a storage case, etc. The lower space 11b can be used for placing emergency supplies, such as a spare tire, a fire extinguisher, a first-aid kit, a driver's tool kit, and a warning triangle, etc. Of course, the user can adjust the kinds of the items placed in the upper space 11a and the lower space 11b by himself/herself to meet the actual needs.

With continued reference to Fig. 1, the boot 10 has the left side wall 12 and the right side wall (not shown in the figure) that are opposite and substantially parallel to each other. In one or more embodiments, a mounting bracket 13 is fixed to the left side wall 12, and the limiting member 222 of the trunk floor mounting structure 20 is provided on the mounting bracket 13. Alternatively, the mounting bracket 13 may also be arranged on the right side wall, and the limiting member 222 may also be arranged on the mounting bracket 13 located on the right side wall. Preferably, the mounting bracket 13 is arranged on the left side wall 12 and the right side wall respectively, and the limiting member 222 is also arranged on the mounting bracket 13 on the left side wall 12 and the right side wall respectively. The mounting bracket 13 includes a bracket body 131. The bracket body 131 may be integrally formed by means of an injection molding process using a suitable resin (e.g., ABS, PP, etc.) material to simplify a manufacturing process. In one or more embodiments, two bracket mounting holes 134 spaced apart from each other in an X direction (i.e., a front-rear direction) of the vehicle 1 are formed in the bracket body 131. Each bracket mounting hole 134 may receive a fastener (not shown in the figure) fitting therewith such that the mounting bracket 13 can be securely and stably fixed to the left side wall 12. The fastener includes, but is not limited to, a screw, a bolt, etc. Alternatively, the number of the bracket mounting holes 134 may also be set as other appropriate number value, such as 3, 4, etc.

It should be noted that the vehicle 1 further includes, but is not limited to, other components (not shown in the figure), such as a body, wheels, seats, etc. In one or more embodiments, the vehicle 1 is a battery electric vehicle. Alternatively, the vehicle 1 may also be a hybrid electric vehicle, a fuel-powered vehicle, or other suitable vehicles. The vehicle 1 may be a car, a SUV, an MPV, or other suitable vehicles.

Specific embodiments of the trunk floor mounting structure 20 for a vehicle 1 according to the disclosure will be described in detail below with reference to Figs. 1-11.

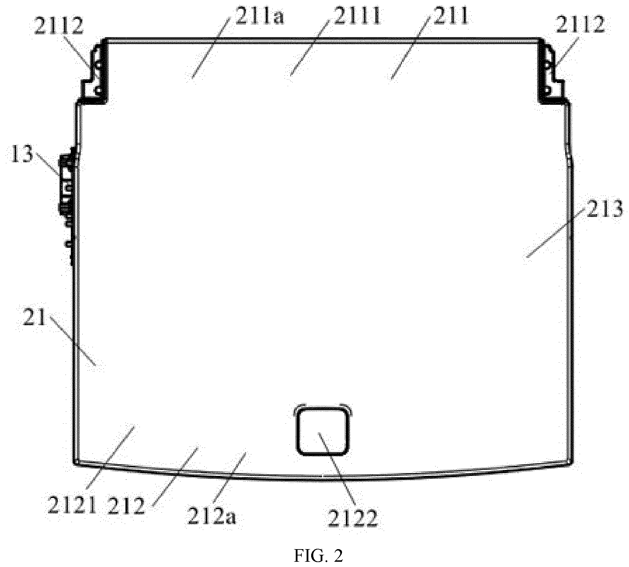

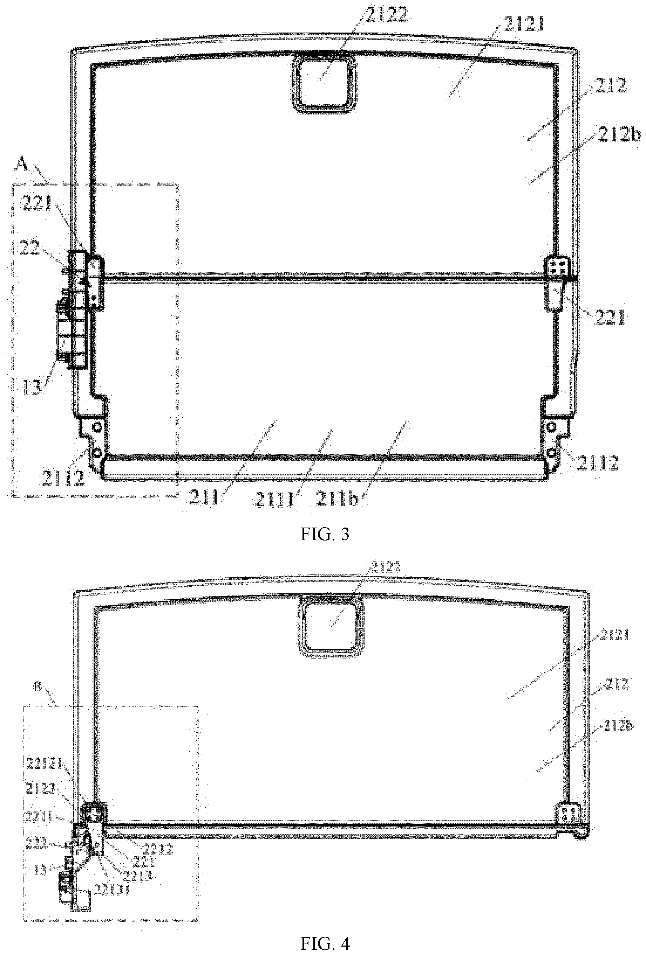

Fig. 2 is a top view of an embodiment of the trunk floor mounting structure for the vehicle according to the disclosure; Fig. 3 is a bottom view of an embodiment of the trunk floor mounting structure for the vehicle according to the disclosure; Fig. 4 is a schematic structural diagram of an embodiment of the floor in a suspended position in the trunk floor mounting structure for the vehicle according to the disclosure. As shown in Figs. 1-4, in one or more embodiments, the trunk floor mounting structure 20 for the vehicle 1 according to the disclosure includes the floor 21 and the suspension mechanism 22. The floor 21 is detachably fixed in the boot 10. The floor 21 includes the front floor 211 and the rear floor 212 reversibly fixed to the front floor 211. The front floor 211 has a substantially rectangular front floor body 2111. The front floor body 2111 has a front floor upper surface 211a and a front floor lower surface 211b that are opposite to each other. The front floor body 2111 may be manufactured by means of an injection molding process using a suitable resin material (e.g., ABS, PP, etc.). The left side and the right side of a front portion of the front floor body 2111 are respectively provided with snap-fitting portions 2112 that are arranged opposite to each other, such that the snap-fitting portions are engaged with snap-fitting structures (not shown in the figures) fitting therewith in the boot 10, allowing the front floor 211 to be conveniently snap-fitted into the boot 10, thereby facilitating assembly and disassembly. In addition, the front floor 211 is configured to be fixed in the boot 10, and may also shield components such as a rope placed in the lower space 11b of the boot 10, so as to exert an aesthetic effect. In one or more embodiments, a limiting groove 2113 extending vertically toward the inside of the front floor body 2111 is formed in the front floor lower surface 211b to receive the stop member 221 in the suspension mechanism 22, such that the entire floor 21 has a stable and secure connection, and thus enhances the mechanical bearing capacity of the floor 21.

With continued reference to Figs. 1-4, in one or more embodiments, the rear floor 212 also has a substantially rectangular rear floor body 2121. The rear floor body 2121 has a rear floor upper surface 212a and a rear floor lower surface 212b that are opposite to each other. Referring to Fig. 1, the rear floor lower surface 212b of the rear floor body 2121 is configured to be in lap joint with a support wall 14 of the boot 10 located at a rear portion, such that the entire floor 21 can be arranged substantially horizontally in the boot 10. Preferably, the rear floor body 2121 is configured to be machined from the same raw material and process as the front floor body 2111 in order to facilitate machining. A substantially-rectangular rounded grip hole 2122 is formed in the rear floor body 2121 close to the rear portion of the boot 10, such that the rear floor 212 can be conveniently flipped by means of the grip hole 2122. A mounting groove 2123 that can receive the fixed end 2212 of the stop member 221 of the suspension mechanism 22 is provided on the rear floor lower surface 212b close to a left side edge and/or a right side edge thereof, such that the stop member 221 can be securely and stably fixed to the rear floor 212.

With continued reference to Fig. 2, in one or more embodiments, there is a flexible plate 213 covering a connection of the rear floor 212 and the front floor 211. The flexible plate 213 has a first end (not shown in the figure) fixed to the front floor upper surface 211a and a second end (not shown in the figure) fixed to the rear floor upper surface 212a. With the above-described arrangement, the pivotal connection between the rear floor 212 and the front floor 211 can be achieved by means of the flexible plate 213, a joint between the rear floor 212 and the front floor 211 can also be covered by the flexible plate 213, improving the aesthetic level. Preferably, the flexible plate 213 is configured to cover the entire front floor upper surface 211a and the rear floor upper surface 212a in order to further improve the aesthetic level. The flexible material 213 may be processed with PET (i.e., polyethylene terephthalate), PA (i.e., polyamide), or other suitable materials to provide good mechanical and bending resistance properties. The flexible material 213 may form a fixed connection with the front floor body 2111 and the rear floor body 2121 by means of bonding. Alternatively, the rear floor body 2121 and the front floor body 2111 may also be connected by using a hinge or other suitable means, as long as the rear floor 212 is rotatably fixed to the front floor 211. In one or more embodiments, a plurality of hook and loop fasteners (not shown in the figure) spaced apart from each other are further provided between the front floor 211 and the rear floor 212. Each hook and loop fastener has a third end fixed to the front floor lower surface 211b and a fourth end fixed to the rear floor lower surface 212b. With the above-described arrangement, it is possible to further enhance the firmness of connection between the rear floor 212 and the front floor 211.

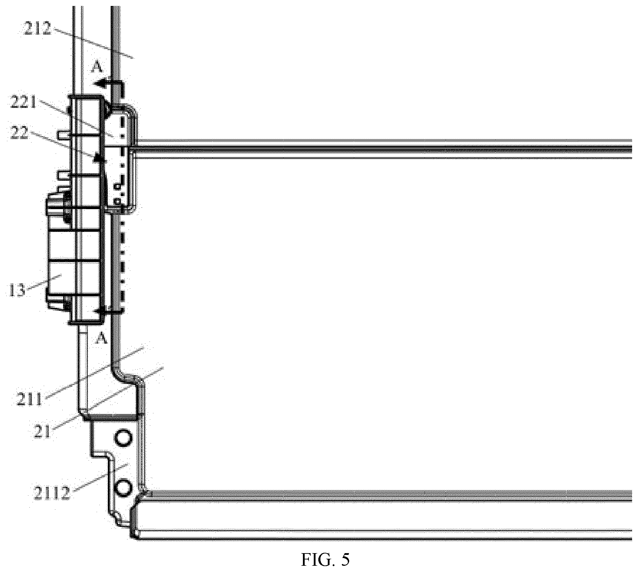

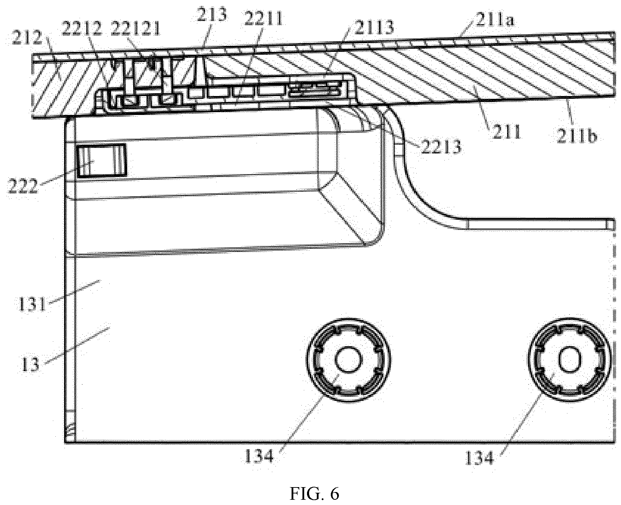

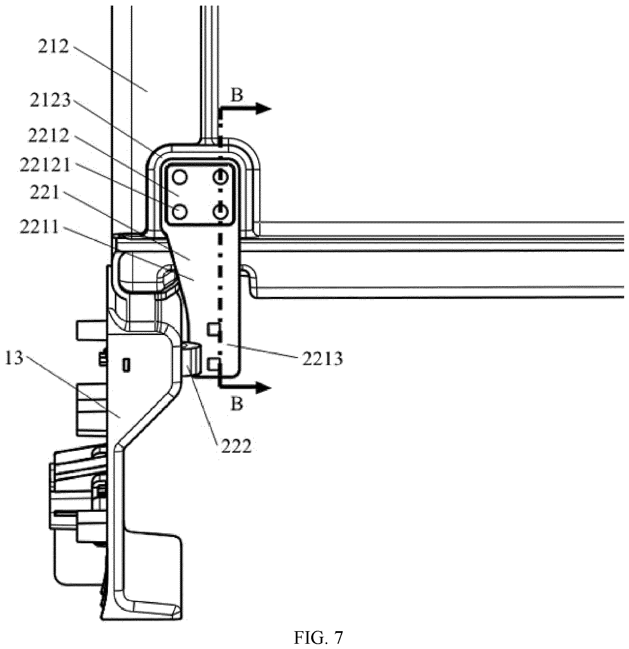

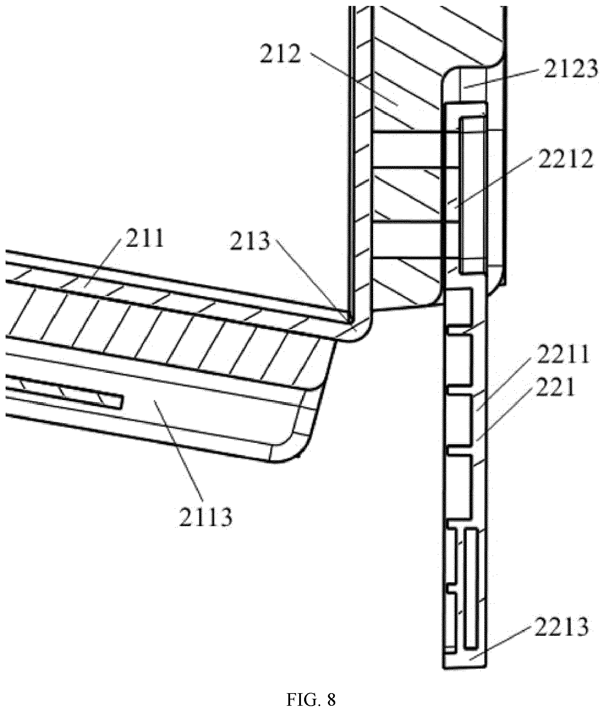

Fig. 5 is a partially enlarged view of part A of the embodiment of the trunk floor mounting structure for the vehicle shown in Fig. 3; Fig. 6 is a sectional view taken along section line A-A shown in Fig. 5; Fig. 7 is a partially enlarged view of part B of the embodiment of the trunk floor mounting structure for the vehicle shown in Fig. 4; Fig. 8 is a sectional view taken along section line B-B shown in Fig. 7. As shown in Figs. 5-8, in one or more embodiments, the suspension mechanism 22 includes the stop member 221 and the limiting member 222 cooperating with each other. The stop member 221 includes a first stop member (not shown in the figures) and a second stop member (not shown in the figures) respectively located on the left side and the right side of the rear floor lower surface 212b. Correspondingly, the limiting member 222 includes a first limiting member (not shown in the figures) and a second limiting member (not shown in the figures) respectively on the left side wall 12 and the right side wall of the vehicle 1. The first stop member cooperates with the first limiting member, and the second stop member cooperates with the second limiting member, so that the left side and the right side of the rear floor 212 are more uniformly stressed when the rear floor is suspended. Alternatively, the stop member 221 may also be provided on only one of the left side and the right side of the rear floor lower surface 212b. Correspondingly, the limiting member 222 may also be provided on only one of the left side wall 12 and the right side wall as long as the limiting member can cooperate with the stop member 221.

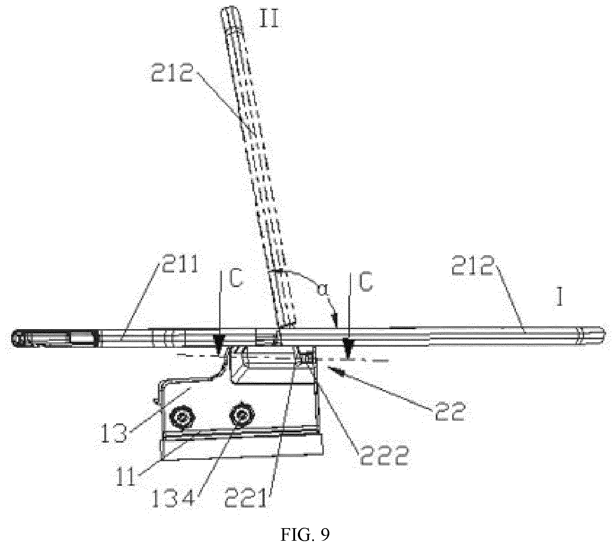

With continued reference to Figs. 5-8, the stop member 221 has a substantially plate-like stop member body 2211. The stop member body 2211 may be manufactured by means of an injection molding process using a suitable resin material, such as ABS, PP, etc. The stop member body 2211 has a fixed end 2212 and a movable end 2213 opposite to each other. Referring to Fig. 9, in one or more embodiments, the fixed end 2212 is fixed in the mounting groove 2123 of the rear floor lower surface 212b. Specifically, four mounting parts 22121 that are spaced apart from each other and substantially located at four corners of a square are formed on the fixed end 2212. The stop member 221 can be stably and securely fixed to the rear floor 212 by means of the four mounting parts 22121. The mounting parts 22121 include, but are not limited to, screws, threaded holes, etc. Alternatively, the number of the mounting parts 22121 may also be set as other suitable number value greater than or less than 4, such as 3, 5, etc. In an assembled state, the stop member body 2211 may extend from the rear floor lower surface 212b to the front floor lower surface 211b. In one or more embodiments, the movable end 2213 of the stop member body 2211 may be restrained within the limiting groove 2113 in the front floor lower surface 211b. By providing the limiting groove 2113 and the mounting groove 2123, the lower surface of the entire stop member 221 can be substantially flush with the front floor lower surface 211b and the rear floor lower surface 212b, so that both the front floor 211 and the rear floor 212 can form a stable connection, and the stop member 221 can also be prevented from excessively occupying the lower space 11b in the boot 10. Referring to Fig. 4, in one or more embodiments, two reinforcement protrusions 22131 extending vertically outwardly are formed on the side of the movable end 2213 away from the front floor lower surface 211b so as to enhance the rigidity and strength of the movable end 2213. The number of the reinforcement protrusions 22131 may also be set as other suitable number value greater than or less than 2, such as 1, 3, etc.

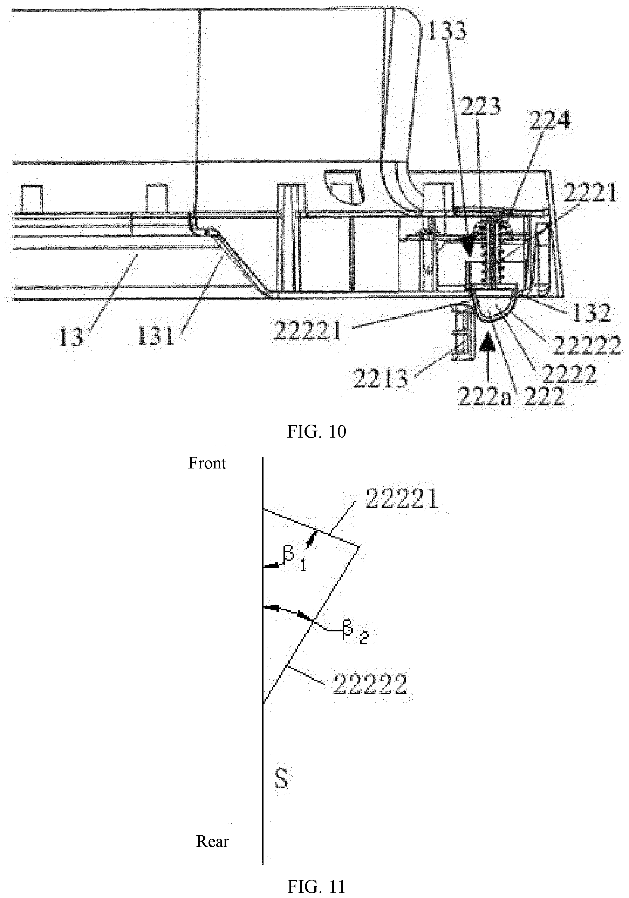

Fig. 9 is a schematic structural diagram of an embodiment of the floor in different positions in the trunk floor mounting structure for the vehicle according to the disclosure; Fig. 10 is a sectional view taken along section line C-C shown in Fig. 9; Fig. 11 is a schematic diagram of an angle of an embodiment of a first inclined surface and a second inclined surface in the trunk floor mounting structure for the vehicle according to the disclosure. As shown in Figs. 9 and 10, in one or more embodiments, the limiting member 222 is an elastic limiting member 222a retractably fixed in the accommodation cavity 133 of the mounting bracket 13. Alternatively, the limiting member 222 may be provided in other suitable forms. The elastic limiting member 222a includes a telescopic rod 2221 and a limiting head 2222 connected to each other. Preferably, the telescopic rod 2221 and the limiting head 2222 are integrally formed by means of an injection molding process using a suitable resin material to simplify the manufacturing process. The telescopic rod 2221 has a substantially cylindrical shape. The limiting head 2222 is formed on an end of the telescopic rod 2221 on the side away from the bracket body 131 of the mounting bracket 13. The limiting head 2222 is a substantially conical raised head. The raised head is sized to be greater than the size of a through hole 132 of the mounting bracket 13, such that part of the limiting head 2222 can extend out of the through hole 132 to cooperate with the stop member 221 and also to play a role of constraining the limiting head 2222. In one or more embodiments, the limiting head 2222 has a first inclined surface 22221 and a second inclined surface 22222 that are oppositely arranged. The first inclined surface 22221 faces a front portion of the boot 10 (i.e., a front portion of the vehicle 1), and the second inclined surface 22222 faces the rear portion of the boot 10 (i.e., the rear portion of the vehicle 1). As shown in Fig. 11, a first angle of inclination β₁ formed by the first inclined surface 22221 and a plane S where the left side wall 12 is located is greater than a second angle of inclination β₂ formed by the second inclined surface 22222 and the plane S. For example, β₁ is 60° or other suitable angle, and β₂ is 40° or other suitable angle. In other words, the first inclined surface 22221 is greater than the second inclined surface 22222 in the degree of inclination relative to the plane S where the left side wall 12 is located. Therefore, the stop member 221 undergoes a larger blocking action when it abuts against the first inclined surface 22221, but undergoes a smaller blocking action when it abuts against the second inclined surface 22222. With continued reference to Fig. 10, the telescopic rod 2221 is sleeved with a reset elastic member 223. The reset elastic member 223 may be a spring, rubber, or other suitable elastic members. One end of the reset elastic member 223 abuts against the limiting head 2222, and the opposite end is fixed to an elastic member mounting bracket 224 in the accommodation cavity 133.

When the trunk floor mounting structure 20 for the vehicle 1 of the disclosure is assembled in the vehicle 1, the front floor 211 is snap-fitted to the boot 10 by means of the snap-fitting portions 2112, and the rear floor 212 is in lap joint with the support wall 14 of the boot 10. The storage space 11 of the boot 10 is divided into the upper space 11a and the lower space 11b by the front floor 211 and the rear floor 212 arranged in a substantially horizontal direction. In this case, the rear floor 212 has the initial position I (see Fig. 9) extending in the substantially horizontal direction.

When it is desired to fetch an item from the lower space 11b, the user can flip the rear floor 212 by means of the grip hole 2122 formed in the rear floor 212. The direction of flipping is a "forward direction", i.e., toward the front portion of the boot 10. During this process, the movable end 2213 on the stop member 221 simultaneously rotates about the fixed end 2212. When the rear floor 212 is flipped by the predetermined obtuse angle α, the movable end 2213 abuts against the limiting member 222 protruding from the side wall of the boot 10. In this case, the rear floor 212 is located at the suspended position II (see Fig. 9). In one or more embodiments, the predetermined obtuse angle α is greater than 90° but less than or equal to 120°. Further, the predetermined obtuse angle α ranges from 95° to 105°. In this case, the movable end 2213 abuts against the first inclined surface 22221 of the limiting head 2222. Since the first inclined surface 22221 has a larger angle of inclination relative to the plane S where the left side wall 12 is located, the movable end 2213 can continue to flip in the forward direction by overcoming a relatively large blocking action, such that the rear floor 212 can be stably suspended at the suspended position II. Therefore, the user can conveniently fetch an item from the lower space 11b without holding the rear floor 212 with one hand in the meanwhile, and the operation is easy and convenient. Further, the user can reversely flip the rear floor 212 by means of the grip hole 2122 such that the rear floor abuts against the support wall 14 of the boot 10, thereby achieving reset. The direction of flipping is a "reverse direction", i.e., toward the rear portion of the boot 10.

When it is desired to continue to forwardly flip the rear floor 212 from the suspended position II, only by continuing to apply an external force to the rear floor 212, the stop member 221 forces the elastic limiting member 222a to move toward the inside of the accommodation cavity 133 under the action of the external force. During this process, the reset elastic member 223 retracts. The rear floor 212 is smoothly flipped toward the front portion of the boot 10 and can be folded over the front floor 211. In this case, the rear floor 212 is in a folded position (not shown in the figures). When the stop member 221 is disengaged from the limiting head 2222 and the external force is then removed, the reset elastic member 223 automatically rebounds under the action of elastic recovery, the elastic limiting member 222a moves away from the accommodation cavity 133 and resets, and part of the limiting head 2222 extends out from the through hole 132.

When it is desired to reset the rear floor 212 from the folded position to the initial position, only the rear floor 212 is required to be flipped reversely. In this process, when the stop member 221 abuts against the limiting head 2222, the stop member abuts against the second inclined surface 22222 with a smaller degree of inclination. Therefore, the user can overcome the blocking action of the elastic limiting member 222a only by applying a small external force, so as to achieve smooth resetting.

Heretofore, the technical solutions of the disclosure have been described with reference to the preferred embodiments shown in the accompanying drawings. However, those skilled in the art can readily understand that the scope of protection of the disclosure is apparently not limited to these specific embodiments. The extent of the protection conferred by the invention shall be determined by the claims. Nevertheless, the description and drawings shall be used to interpret the claims.

## Claims

1. A trunk floor mounting structure (20) for a vehicle, the trunk floor mounting structure being configured to be arrangeable in a boot (10) of the vehicle, and comprising:
a floor (21), the floor comprising a front floor (211) and a rear floor (212) reversibly fixed to the front floor; and
a suspension mechanism (22), the suspension mechanism comprising a stop member (221) and a limiting member (222) cooperating with each other, the stop member having a fixed end (2212) fixed to a lower surface (212b) of the rear floor and a movable end (2213) capable of extending to a lower surface (211b) of the front floor, and the limiting member being configured to be arrangeable on at least one of a left side wall (12) and a right side wall of the boot (10),
wherein when the rear floor is flipped by a predetermined obtuse angle relative to the front floor from an initial position, the movable end abuts against the limiting member such that the rear floor is suspended in a suspended position.

2. The trunk floor mounting structure for the vehicle according to claim 1, wherein the limiting member (222) is a retractable elastic limiting member, and the movable end (2213) may force the elastic limiting member to retract, such that the rear floor may continue to flip toward the front floor from the suspended position and may be reset reversely.

3. The trunk floor mounting structure for the vehicle according to claim 2, wherein the elastic limiting member in an assembled state has a first inclined surface (22221) facing a front portion of the boot and a second inclined surface (22222) facing a rear portion of the boot, and
a first angle of inclination formed by the first inclined surface and a plane in which the left side wall or the right side wall is located is greater than a second angle of inclination formed by the second inclined surface and the plane.

4. The trunk floor mounting structure for the vehicle according to any one of claims 1 to 3, wherein there is a flexible plate (213) covering a connection of the front floor and the rear floor, and the flexible plate has a first end fixed to an upper surface of the front floor and a second end fixed to an upper surface of the rear floor.

5. The trunk floor mounting structure for the vehicle according to claim 4, wherein a plurality of hook and loop fasteners spaced apart from each other are further provided between the front floor and the rear floor, and each of the hook and loop fasteners has a third end fixed to the lower surface of the front floor and a fourth end fixed to the lower surface of the rear floor.

6. The trunk floor mounting structure for the vehicle according to any one of claims 1 to 5, wherein the predetermined obtuse angle is greater than 90° but less than or equal to 120°.

7. The trunk floor mounting structure for the vehicle according to any one of claims 1 to 6, wherein a limiting groove (2113) that extends toward the inside of the front floor and is capable of receiving the movable end is formed in the lower surface of the front floor.

8. The trunk floor mounting structure for the vehicle according to any one of claims 1 to 7, wherein the limiting member (222) comprises a first limiting member suitable for being arranged on the left side wall, and a second limiting member suitable for being arranged on the right side wall, and the stop member (221) comprises a first stop member cooperating with the first limiting member and a second stop member cooperating with the second limiting member.

9. A vehicle, comprising:
a boot; and
a trunk floor mounting structure (20) for a vehicle according to any one of claims 1-8, the trunk floor mounting structure being arranged in the boot.

10. The vehicle according to claim 9, wherein an accommodation cavity is formed in the boot, a side wall of the boot is formed with a through hole in communication with the accommodation cavity, the limiting member of the trunk floor mounting structure is retractably fixed in the accommodation cavity, and part of the limiting member is capable of extending out of the through hole so as to cooperate with the stop member of the trunk floor mounting structure.

## Patentansprüche

1. Laderaumbodenmontagestruktur (20) für ein Fahrzeug, wobei die Laderaumbodenmontagestruktur dazu ausgelegt ist, in einem Kofferraum (10) des Fahrzeugs anordenbar zu sein, und Folgendes aufweist:
einen Boden (21), wobei der Boden einen vorderen Boden (211) und einen hinteren Boden (212), der umkehrbar am vorderen Boden befestigt ist, aufweist; und
einen Aufhängungsmechanismus (22), wobei der Aufhängungsmechanismus ein Anschlagelement (221) und ein Begrenzungselement (222) aufweist, die miteinander kooperieren, wobei das Anschlagelement ein festes Ende (2212), das an einer unteren Fläche (212b) des hinteren Bodens befestigt ist, und ein bewegbares Ende (2213), das in der Lage ist, sich zu einer unteren Fläche (211b) des vorderen Bodens zu erstrecken, aufweist und wobei das Begrenzungselement dazu ausgelegt ist, an mindestens einem einer linken Seitenwand (12) und einer rechten Seitenwand des Kofferraums (10) anordenbar zu sein,
wobei, wenn der hintere Boden um einen vorbestimmten stumpfen Winkel von der Ausgangsposition zum vorderen Boden gekippt ist, das bewegbare Ende am Begrenzungselement anliegt, derart, dass der hintere Boden in einer aufgehängten Position aufgehängt ist.

2. Laderaumbodenmontagestruktur für das Fahrzeug nach Anspruch 1, wobei das Begrenzungselement (222) ein zurückziehbares elastisches Begrenzungselement ist und das bewegbare Ende (2213) das elastische Begrenzungselement zum Zurückziehen drängen kann, derart, dass der hintere Boden aus der aufgehängten Position weiter zum vorderen Boden gekippt werden und umgekehrt zurückgesetzt werden kann.

3. Laderaumbodenmontagestruktur für das Fahrzeug nach Anspruch 2, wobei das elastische Begrenzungselement in einem zusammengesetzten Zustand eine erste geneigte Fläche (22221), die einem vorderen Abschnitt des Kofferraums zugewandt ist, und eine zweite geneigte Fläche (22222), die einem hinteren Abschnitt des Kofferraums zugewandt ist, aufweist und
ein erster Neigungswinkel, der durch die erste geneigte Fläche und eine Ebene, in der sich die linke Seitenwand oder die rechte Seitenwand befindet, gebildet ist, größer ist als ein zweiter Neigungswinkel, der durch die zweite geneigte Fläche und die Ebene gebildet wird.

4. Laderaumbodenmontagestruktur für das Fahrzeug nach einem der Ansprüche 1 bis 3, wobei es eine flexible Platte (213) gibt, die eine Verbindung des vorderen Bodens und des hinteren Bodens abdeckt, und die flexible Platte ein erstes Ende, das an einer oberen Fläche des vorderen Bodens befestigt ist, und ein zweites Ende, das an einer oberen Fläche des hinteren Bodens befestigt ist, aufweist.

5. Laderaumbodenmontagestruktur für das Fahrzeug nach Anspruch 4, wobei ferner zwischen dem vorderen Boden und dem hinteren Boden eine Vielzahl von Klettverschlüssen vorgesehen sind, die voneinander beabstandet sind, und jeder der Klettverschlüsse ein drittes Ende, das an der unteren Fläche des vorderen Bodens befestigt ist, und ein viertes Ende, das an der unteren Fläche des hinteren Bodens befestigt ist, aufweist.

6. Laderaumbodenmontagestruktur für das Fahrzeug nach einem der Ansprüche 1 bis 5, wobei der vorbestimmte stumpfe Winkel größer ist als 90° aber kleiner als oder gleich 120°.

7. Laderaumbodenmontagestruktur für das Fahrzeug nach einem der Ansprüche 1 bis 6, wobei in der unteren Fläche des vorderen Bodens eine Begrenzungsnut (2113) ausgebildet ist, die sich zur Innenseite des vorderen Bodens erstreckt und geeignet ist, das bewegbare Ende aufzunehmen.

8. Laderaumbodenmontagestruktur für das Fahrzeug nach einem der Ansprüche 1 bis 7, wobei das Begrenzungselement (222) ein erstes Begrenzungselement, das geeignet ist, an der linken Seitenwand angeordnet zu werden, und ein zweites Begrenzungselement, das geeignet ist, an der rechten Seitenwand angeordnet zu werden, aufweist und das Anschlagelement (221) ein erstes Anschlagelement, das mit dem ersten Begrenzungselement zusammenwirkt, und ein zweites Anschlagelement, das mit dem zweiten Begrenzungselement zusammenwirkt, aufweist.

9. Fahrzeug, das Folgendes aufweist:
einen Kofferraum und
eine Laderaumbodenmontagestruktur (20) für ein Fahrzeug nach einem der Ansprüche 1-8, wobei die Laderaumbodenmontagestruktur im Kofferraum angeordnet ist.

10. Fahrzeug nach Anspruch 9, wobei im Kofferraum ein Aufnahmehohlraum ausgebildet ist, eine Seitenwand des Kofferraums mit einem Durchgangsloch in Kommunikation mit dem Aufnahmehohlraum ausgebildet ist, das Begrenzungselement der Laderaumbodenmontagestruktur zurückziehbar im Aufnahmehohlraum befestigt ist und ein Teil des Begrenzungselements geeignet ist, sich aus dem Durchgangsloch zu erstrecken, um mit dem Anschlagelement der Laderaumbodenmontagestruktur zusammenzuwirken.

## Revendications

1. Structure de montage de plancher de coffre (20) pour un véhicule, la structure de montage de plancher de coffre étant configurée pour être agençable dans un compartiment à bagages (10) du véhicule, et comprenant :
un plancher (21), le plancher comprenant un plancher avant (211) et un plancher arrière (212) fixé de façon réversible au plancher avant ; et
un mécanisme de suspension (22), le mécanisme de suspension comprenant un élément d'arrêt (221) et un élément de limitation (222) coopérant l'un avec l'autre, l'élément d'arrêt ayant une extrémité fixe (2212) fixée à une surface inférieure (212b) du plancher arrière et une extrémité mobile (2213) capable de s'étendre jusqu'à une surface inférieure (211b) du plancher avant, et l'élément de limitation étant configuré pour être agençable sur au moins une d'une paroi latérale gauche (12) et d'une paroi latérale droite du compartiment à bagages (10),
dans laquelle, lorsque le plancher arrière est retourné selon un angle obtus prédéterminé relativement au plancher avant depuis une position initiale, l'extrémité mobile prend appui contre l'élément de limitation de telle sorte que le plancher arrière soit suspendu dans une position suspendue.

2. Structure de montage de plancher de coffre pour le véhicule selon la revendication 1, dans laquelle l'élément de limitation (222) est un élément de limitation élastique rétractable, et l'extrémité mobile (2213) peut forcer l'élément de limitation élastique à se rétracter, de telle sorte que le plancher arrière puisse continuer de se retourner vers le plancher avant depuis la position suspendue et puisse être remis dans la position initiale de façon inverse.

3. Structure de montage de plancher de coffre pour le véhicule selon la revendication 2, dans laquelle l'élément de limitation élastique, dans un état assemblé, a une première surface inclinée (22221) faisant face à une partie avant du compartiment à bagages et une seconde surface inclinée (22222) faisant face à une partie arrière du compartiment à bagages, et
un premier angle d'inclinaison formé par la première surface inclinée et un plan dans lequel la paroi latérale gauche ou la paroi latérale droite est située est supérieur à un second angle d'inclinaison formé par la seconde surface inclinée et le plan.

4. Structure de montage de plancher de coffre pour le véhicule selon l'une quelconque des revendications 1 à 3, dans laquelle il y a une plaque flexible (213) couvrant une liaison du plancher avant et du plancher arrière, et la plaque flexible a une première extrémité fixée à une surface supérieure du plancher avant et une deuxième extrémité fixée à une surface supérieure du plancher arrière.

5. Structure de montage de plancher de coffre pour le véhicule selon la revendication 4, dans laquelle une pluralité de systèmes de fermeture autoagrippante espacés les uns des autres sont en outre prévus entre le plancher avant et le plancher arrière, et chacun des systèmes de fermeture autoagrippante a une troisième extrémité fixée à la surface inférieure du plancher avant et une quatrième extrémité fixée à la surface inférieure du plancher arrière.

6. Structure de montage de plancher de coffre pour le véhicule selon l'une quelconque des revendications 1 à 5, dans laquelle l'angle obtus prédéterminé est supérieur à 90 ° mais inférieur ou égal à 120 °.

7. Structure de montage de plancher de coffre pour le véhicule selon l'une quelconque des revendications 1 à 6, dans laquelle une rainure de limitation (2113) qui s'étend vers l'intérieur du plancher avant et est capable de recevoir l'extrémité mobile est formée dans la surface inférieure du plancher avant.

8. Structure de montage de plancher de coffre pour le véhicule selon l'une quelconque des revendications 1 à 7, dans laquelle l'élément de limitation (222) comprend un premier élément de limitation approprié pour être agencé sur la paroi latérale gauche, et un second élément de limitation approprié pour être agencé sur la paroi latérale droite, et l'élément d'arrêt (221) comprend un premier élément d'arrêt coopérant avec le premier élément de limitation et un second élément d'arrêt coopérant avec le second élément de limitation.

9. Véhicule, comprenant :
un compartiment à bagages ; et
une structure de montage de plancher de coffre (20) pour un véhicule selon l'une quelconque des revendications 1 à 8, la structure de montage de plancher de coffre étant agencée dans le compartiment à bagages.

10. Véhicule selon la revendication 9, dans lequel une cavité de logement est formée dans le compartiment à bagages, une paroi latérale du compartiment à bagages est formée avec un trou débouchant en communication avec la cavité de logement, l'élément de limitation de la structure de montage de plancher de coffre est fixé de façon rétractable dans la cavité de logement, et une partie de l'élément de limitation est capable de s'étendre hors du trou débouchant afin de coopérer avec l'élément d'arrêt de la structure de montage de plancher de coffre.
